# EUROPÄISCHE PATENTSCHRIFT

(11) **EP 0 731 015 B1**
(45) Veröffentlichungstag und Bekanntmachung des Hinweises auf die Patenterteilung: **25.07.2001**
(21) Anmeldenummer: 96102413.0
(22) Anmeldetag: 17.02.1996
(51) Int. Cl.: B62D 7/22, B62D 6/00, F16F 9/53, F16F 9/12

(54) **Lenkventil**
Steering valve
Soupape de direction

(30) Priorität: 08.03.1995 DE 19508096
(43) Veröffentlichungstag der Anmeldung: 11.09.1996
(73) Patentinhaber: TRW Fahrwerksysteme GmbH & Co. KG, 40547 Düsseldorf (DE)
(72) Erfinder: Gerigk, Hans-Willi, Dipl.-Ing., 46145 Oberhausen (DE)
(74) Vertreter: Stenger, Watzke & Ring Patentanwälte

(56) Entgegenhaltungen:
- EP-A- 0 442 570
- DE-A- 3 302 953
- FR-A- 2 592 449
- JP-A- 6 092 246
- US-A- 2 234 975

## Beschreibung

Die Erfindung betrifft ein Lenkventil zur Versorgung eines Stellgliedes mit Hydraulikdruck, bestehend aus einer Eingangswelle, einer Ausgangswelle, einem zentrierendem Federelement und einem Ventilelement, mit einem Drehschwingungsdämpferelement zur Druckpulsationsdämpfung, wobei an der Eingangs- oder der Ausgangswelle direkt oder indirekt wenigstens eine im wesentlichen koaxiale und mit einem Druckmedium befüllbare Ringkammer ausgebildet ist.

Lenkventile der gattungsgemäßen Art werden insbesondere in Servolenk-Systemen eingesetzt. Der Aufbau derartiger Servolenk-Systeme ist an sich bekannt. Eine mit einer Lenkstange verbundene Eingangswelle ist über ein zentrierendes Federelement mit einer mit einem Ritzel versehenen Ausgangswelle verbunden. Das Ritzel wirkt auf die Zahnstange einer Lenkung. Für derartige Lenksysteme ist die Verwendung von Lenkventilen bekannt. Dazu ist in bekannter Weise ein Drehschieber-Ventilelement vorgesehen, welches bei relativer Verdrehung der Eingangswelle zur Ausgangswelle in Bohrungen endende Hydraulikführungen miteinander verbindet bzw. voneinander trennt. Von einer Pumpe wird Hydraulikflüssigkeit unter Druck durch das System gepumpt. Bei einer relativen Verdrehung der Eingangswelle zur Ausgangswelle wird Hydraulikdruck einem Hydraulikmotor zugeführt, welcher die Zahnstangenbewegung in eine der beiden möglichen Richtungen unterstützt.

Die Aktivierung derartiger Lenkventile erfolgt durch das Verdrehen der Eingangswelle gegenüber der Ausgangswelle, wobei durch das dazwischen angeordnete zentrierende Federelement, beispielsweise einen Torsionsstab, ein Torsionsmoment überwunden werden muß.

Bei einem Typ von Lenkventilen ist in bekannter Weise eine Ventilhülse vorgesehen, welche mit der Ausgangswelle in Eingriff steht und die Eingangswelle umgibt. Diese Ventilhülse weist Steuernuten auf, die mit von außerhalb eines Gehäuses hindurchgeführten Bohrungen für die Hydraulikmittelführung zur Steuerung in Deckung bringbar sind.

Ein anderer Typ von Lenkventilen ist bekannt, wobei im wesentlichen axial liegende Bohrungen miteinander in Deckung gebracht werden.

Bei gattungsgemäßen Lenkventilen besteht ein bekanntes Problem in Form von Drehschwingungen. Diese resultieren in erster Linie aus von den Fahrzeugrädern übertragenen Fahrbahnanregungen, sowie aus Druckpulsationen, die sich in einer zitternden Relativbewegung zwischen der Eingangswelle und der Ausgangswelle bzw. dem Ventilelement bemerkbar macht. Dies kann bishin zu einem Rattern des Lenkrades eines Lenksystems gehen und erzeugt darüber hinaus unangenehme Geräusche.

Im Stand der Technik sind eine Reihe von Lösungen bekannt, um diese Problematik in den Griff zu bekommen. In der WO91/13790 wird ein besonderes Dehnschlauchsystem vorgeschlagen, um die Druckpulsationen zu kompensieren. In der DE 27 55 598 A1 wird vorgeschlagen, dem Hydraulikmedium Luft beizumischen. In der DE 40 23 709 A1 wird die zusätzliche Anordnung von Dämpfervolumen vorgeschlagen und die DE 29 18 475 A1 offenbart die Verwendung eines Hydromotors zwischen Pumpe und Lenkventil. Schließlich ist aus der JP 06 092246 bekannt, zwischen Eingangs- und Ausgangswelle eine Ringkammer vorzusehen, die mit einem Druckmedium befüllbar ist.

Durch die vorbekannten Lösungen werden gattungsgemäße Lenkventile aufwendig bezüglich des Materialbedarfs und der Montage- und Einstellarbeiten und können nur mit großem wirtschaftlichen Aufwand erstellt werden. Insbesondere sind es die jeweils zusätzlich erforderlichen Bauelemente, die sämtlichst außerhalb des Lenkventils zu verwenden sind und dennoch eine Drehschwingungen nicht grundsätzlich vollständig ausschließen können.

Davon ausgehend liegt der vorliegenden Erfindung die **Aufgabe** zugrunde, ein Lenkventil der gattungsgemäßen Art dahingehend weiterzubilden, daß dieses einfach und wirtschaftlich aufgebaut und gegen Drehschwingungen unempfindlich ist.

Zur technischen **Lösung** dieser Aufgabe wird das gattungsgemäße Lenkventil dadurch weitergebildet, daß in der Ringkammer wenigstens ein mit der jeweils anderen Welle direkt oder indirekt verbundenes Kolbenelement in Form eines an einem Ring ausgebildeten Radialsteges auf einer kreisförmigen Bahn bewegbar angeordnet ist.

Mit der erfindungsgemäßen Ausgestaltung wird ein einfach aufgebauter Drehschwingungsdämpfer an einem Servolenkventil der gattungsgemäßen Art angeordnet. Dieser besteht aus wenigstens einer kreisförmigen Kammer und einem darin auf einer im wesentlichen kreisförmigen Bahn bewegbaren Kolbenelement. Die Kammern sind mit viskosem Fluid gefüllt, vorzugsweise mit dem eingesetzten Getriebeöl. Drehschwingungen werden durch den sich bei einer Relativbewegung von Kolben- und Kammerelement ergebenden Druckaufbau in der Kammer und einer daraus resultierenden Kraft am Kolben und somit einem Moment auf die Eingangswelle, welches von seiner Orientierung der Drehschwingung entgegengerichtet ist, gedämpft. Direkt oder indirekt mit den Elementen verbunden bedeutet, daß weitere zusätzliche Elemente zwischengeschaltet sein können. Ein besonders wesentlicher Aspekt im Rahmen der vorliegenden Erfindung besteht darin, daß die Kammer mit unterschiedlichen Fluiden gefüllt sein kann. Diese kann auch unter Druck gesetzt sein. Die Dämpfungswirkung des Drehschwingungsdämpfers ist abhängig von der geometrischen Ausbildung der Dämpferteile, insbesondere deren Spaltweiten und Wirkflächen; ferner der Drehschwingungsfrequenz und -amplitude, sowie der Viskosität oder Dichte des Dämpferfüllfluids. Idealerweise bilden Ringzylinder- und Ringkolbenelement ein abgeschlossenes System, so daß das Füllfluid beim relativen Verdrehen beider Dämpferelemente durch die Leckagespalte zwischen Kolben- und Zylinderelement aufgrund des Druckanstiegs in der sich verkleinernden Kammer von dieser in die sich vergrößernde Kammer strömt. Der hierbei unterschiedliche Druckaufbau in den Kammern übt an den Kolbenelementen eine Kraft aus, die bezüglich der Ventilachse ein Moment auf die Eingangswelle ausübt, welches den Instabilitäten entgegengerichtet ist und sie somit dämpft. Zur einfacheren Befüllung der Dämpferkammer mit viskosem Fluid kann auch durch Leckagespalte zwischen Ringzylinder- und Ringkolbenelement zur Umgebung eine Initialbefüllung der Kammer mit Lenkgetriebefluid erfolgen. Der auch im weiteren Betrieb verbleibende und ggf. toleranzbedingte Leckagestrom mindert jedoch das Dämpfungsvermögen, ist also prinzipiell unerwünscht. Das Wirkprinzip des hier vorgestellten Drehschwingungsdämpfers ist also rein hydraulisch, sich selbst bei hochfrequenter Relativauslenkung seiner Bauteile druckbeaufschlagend; also vom Lenkgetriebebetriebsdruck und von Lenkventilsteuervorgängen unabhängig wirkend. Sein Vorteil ist sein hohes Dämpfungsvermögen bei Nichtbeeinflussung der Ventilcharakteristik. Die Dämpfungswirkung ist vom Systemdruck unabhängig und durch diesen nicht beeinflußt.

Gemäß einem vorteilhaften Vorschlag der Erfindung ist die wenigstens eine Hydraulikdruck beaufschlagbare Kammer eine Ringkammer. Diese ist in vorteilhafter Weise mehrfach unterteilt, so daß sich eine Vielzahl von Ringkammern bilden. Diese können alle zueinander gleich oder unterschiedlich ausgebildet sein. Das wenigstens eine Kolbenelement ist gemäß einem vorteilhaften Vorschlag der Erfindung in Form eines Radialsteges an einem Ring ausgebildet. Sowohl die Ringkammer als auch der oder die Radialstege sind in vorteilhafter Weise an Ringelementen ausgebildet. Mit besonderem Vorteil werden die Ringelemente buchsenförmig ausgestaltet, wobei das Kammerelement und das Stegelement ineinandersteckbar sind. Mit Vorteil wird vorgeschlagen, daß eine der Buchsen an der Eingangswelle befestigt ist. Im Falle, daß das gattungsgemäße Lenkventil über ein Ventilelement in Form einer Ventilhülse verfügt, wird gemäß einem Vorschlag der Erfindung die jeweils andere Buchse an der Ventilhülse befestigt.

Das in der beschriebenen Weise gebildete Ringzylinderelement kann somit als Drehschwingungsdämpfer verwendet werden. Ferner kann bei Einsatz eines Fluids mit steuerbarer, variabler Viskosität, das Ringzylinderelement alternativ oder zusätzlich als Reaktions- und/oder Zentrierelement verwendet werden, da das entstehende Reaktionsmoment u. a. eine Funktion der Viskosität des Fluids ist.

Mit der Erfindung wird ein gattungsgemäßes Lenkventil um eine einfach aufgebaute und montierbare Vorrichtung ergänzt, die insbesondere das Lenkventil gegen Störgrößen wie Drehschwingungsanregungen unempfindlich macht.

Weitere Vorteile und Merkmale der Erfindung ergeben sich aus der folgenden Beschreibung anhand der Figuren. Dabei zeigen:
- Figur 1: eine Schnittdarstellung eines Ausführungsbeispiels eines Lenkventils;
- Figur 2: eine Detaildarstellung an der Stelle II gemäß Figur 1;
- Figur 3: eine Schnittdarstellung eines Ausführungsbeispieles eines Ringzylinderelementes;
- Figur 4: eine Schnittdarstellung entlang der Linie IV-IV in Figur 3;
- Figur 5: eine Darstellung eines Ausführungsbeispieles eines Ringkammerelementes und
- Figur 6: eine Darstellung eines Ausführungsbeispiels eines Ringkolbenelementes.

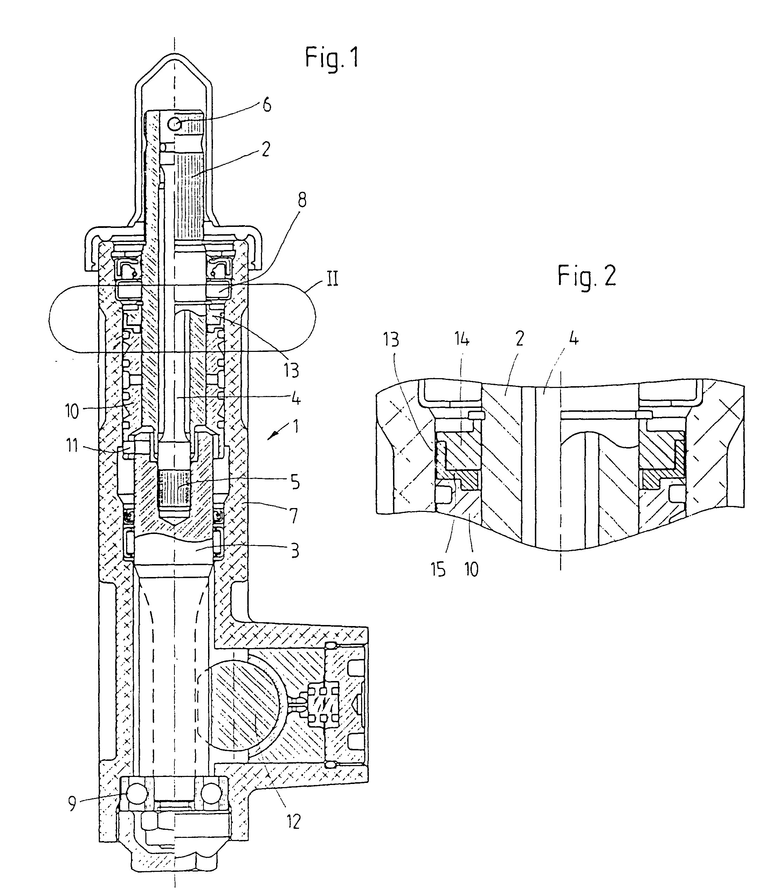

Das in Figur 1 gezeigte Lenkventil 1 besteht aus einer Eingangswelle 2 und einer Ausgangswelle 3, welche im gezeigten Ausführungsbeispiel mittels eines Torsionsstabes 4 in Abhängigkeit von der Federsteifigkeit des Torsionsstabes zueinander relativbeweglich verbunden sind. Der Torsionsstab 4 ist im Verbindungsbereich 5 in die Ausgangswelle 3 eingesetzt und im Verbindungsbereich 6 mit der Eingangswelle 2 durch einen Stift verbunden. Die Anordnung ist in ein Gehäuse 7 eingesetzt und mittels Lagern 8 und 9 drehbar gelagert. Die Eingangswelle 2 ist mit einer nicht gezeigten Lenksäule/rad verbunden. Eine Ventilhülse 10 ist die Eingangswelle 2 umgebend im Verbindungsbereich 11 mit der Ausgangswelle verbunden. Bei einer Relativbewegung der Eingangswelle 2 relativ zur Ausgangswelle 3 und damit auch zur Ventilhülse 10 werden Steuernuten relativ zueinander bewegt, so daß Hydraulikdruck einem nicht gezeigten Hydraulikmotor zugeführt wird. Die Ausgangswelle 3 ist zugleich mit einer nicht weiter dargestellten Zahnstangenlenkung 12 im Eingriff.

Zwischen der Eingangswelle 2 und der Ventilhülse 10 ist ein Ringzylinderelement 13 angeordnet, welches in einer vergrößerten Detaildarstellung in Figur 2 gezeigt ist. Ein Ringkolbenelement 14 ist drehfest mit der Eingangswelle 2 verbunden, während ein Ringkammerelement 15 drehfest mit der Ventilhülse 10 verbunden ist.

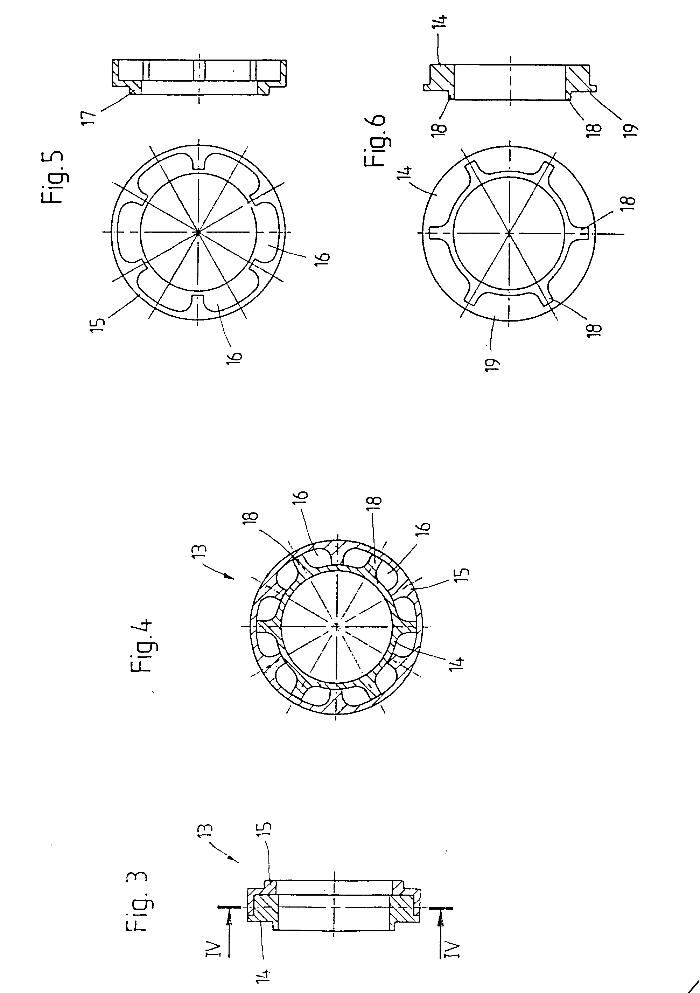

In den Figuren 3 bis 6 sind die einzelnen Elemente des Ringzylinderelementes 13 dargestellt.

Das Ringzylinderelement 13 besteht aus dem Ringkolbenelement 14 und dem Ringkammerelement 15. Das Ringkolbenelement 14 ist in Form eines Ringelementes ausgebildet, welches radial abstehende Kolben 18 aufweist. Darüber hinaus ist eine deckelartige Erweiterung 19 ausgearbeitet.

Das Ringkammerelement 15 weist seinerseits eine Mehrzahl von Kammern 16 auf, die in den Ring eingearbeitet sind. Es bleibt somit in Axialrichtung gesehen ein Boden 17 stehen. Im gezeigten Ausführungsbeispiel sind insgesamt sechs Kammern 16 und sechs Kolben 18 ausgebildet. Diese lassen sich, wie in Figur 4 gezeigt, ineinander pressen, ineinander passen, so daß sich insgesamt 6 Ringzylinder ergeben. Jene sind mit viskosem Fluid gefüllt, so daß sich bei kleinster, jedoch hochfrequenter Auslenkung der Eingangswelle bzw. des Kolbens aufgrund der Inkompressibilitat des Fluids ein Reaktionsdruck im Zylinder aufbaut, der über den Kolben ein Reaktionsmoment erzeugt, der die Drehschwingungsanregung dämpft. Bei niederfrequenter Auslenkung, wie jene der üblichen Lenkbewegung, baut sich in den Zylindern wegen der Leckagespalte zwischen Zylinder und Umgebung und jener der Kolben kein wesentlicher Reaktionsdruck auf, der die Funktionskennung des Lenkgetiebeventils negativ beeinflussen könnte. Das in der beschriebenen Weise gebildete Ringzylinderelement kann somit als Drehschwingungsdämpfer verwendet werden. Ferner kann bei Einsatz eines Fluids mit steuerbarer, variabler Viskosität, das Ringzylinderelement alternativ oder zusätzlich als Reaktions- und/oder Zentrierelement verwendet werden, da das entstehende Reaktionsmoment u. a. eine Funktion der Viskosität des Fluids ist.

### Bezugszeichenliste:

- 1: Lenkventil
- 2: Eingangswelle
- 3: Ausgangswelle
- 4: Torsionsstab
- 5: Verbindungsbereich
- 6: Verbindungsbereich
- 7: Gehäuse
- 8: Lager
- 9: Lager
- 10: Ventilhülse
- 11: Verbindungsbereich
- 12: Zahnstange
- 13: Ringzylinderelement
- 14: Ringkolbenelement
- 15: Ringkammerelement
- 16: Kammer
- 17: Boden
- 18: Kolben
- 19: Deckel

## Patentansprüche

1. Lenkventil (1) zur Versorgung eines Stellgliedes mit Hydraulikdruck, bestehend aus einer Eingangswelle (2), einer Ausgangswelle (3), einem zentrierendem Federelement und einem Ventilelement, mit einem Drehschwingungsdämpferelement zur Druckpulsationsdämpfung, wobei an der Eingangs- oder der Ausgangswelle direkt oder indirekt wenigstens eine im wesentlichen koaxiale und mit einem Druckmedium befüllbare Ringkammer (16) ausgebildet ist, dadurch gekennzeichnet, daß in der Ringkammer wenigstens ein mit der jeweils anderen Welle direkt oder indirekt verbundenes Kolbenelement (18) in Form eines an einem Ring ausgebildeten Radialsteges auf einer kreisförmigen Bahn bewegbar angeordnet ist.

2. Lenkventil nach Anspruch 1, dadurch gekennzeichnet, daß die Ringkammer in mehrere Kammern (16) unterteilt ist.

3. Lenkventil nach einem der vorhergehenden Ansprüche, dadurch gekennzeichnet, daß die Kammern (16) und die Kolben (18) an ineinander einsetzbaren Ringelemente ausgebildet sind.

4. Lenkventil nach einem der vorhergehenden Ansprüche, dadurch gekennzeichnet, daß die Kammern (16) und die Kolben (18) an ineinander verschachtelbaren Buchsen ausgebildet sind.

5. Lenkventil nach einem der vorhergehenden Ansprüche, dadurch gekennzeichnet, daß das die Kolben aufweisende Element an der Eingangswelle befestigt ist.

6. Lenkventil nach einem der vorhergehenden Ansprüche, wobei dieses als Ventilelement eine Ventilhülse aufweist, dadurch gekennzeichnet, daß das die Kammern aufweisende Element an der Ventilhülse (10) befestigt oder integriert ist.

7. Lenkventil nach einem der vorhergehenden Ansprüche, dadurch gekennzeichnet, daß die Kammer mit viskosem Fluid gefüllt ist.

8. Lenkventil nach einem der Ansprüche 1 bis 7, dadurch gekennzeichnet, daß die Kammer mit einem Fluid von steuerbarer, variabler Viskosität gefüllt ist.

## Claims

1. Steering valve (1) for supplying an actuator with hydraulic pressure, comprising an input shaft (2), an output shaft (3), a centring spring element and a valve element, having a torsional vibration damper element for pressure pulsation damping, wherein there is formed directly or indirectly on the input shaft or the output shaft at least one substantially coaxial annular chamber (16) fillable with a pressure medium, characterized in that in the annular chamber at least one piston element (18), which is designed as a radial web formed on a ring and is connected directly or indirectly to the respective other shaft, is disposed so as to be movable along a circular path.

2. Steering valve according to claim 1, characterized in that the annular chamber is subdivided into a plurality of chambers (16).

3. Steering valve according to one of the preceding claims, characterized in that the chambers (16) and the pistons (18) are formed on annular elements, which are insertable one into the other.

4. Steering valve according to one of the preceding claims, characterized in that the chambers (16) and the pistons (18) are formed on bushes, which are nestable one in the other.

5. Steering valve according to one of the preceding claims, characterized in that the element comprising the pistons is fastened to the input shaft.

6. Steering valve according to one of the preceding claims, wherein said steering valve comprises a valve sleeve as a valve element, characterized in that the element comprising the chambers is fastened to or integrated in the valve sleeve (10).

7. Steering valve according to one of the preceding claims, characterized in that the chamber is filled with viscous fluid.

8. Steering valve according to one of claims 1 to 7, characterized in that the chamber is filled with a fluid of controllable, variable viscosity.

## Revendications

1. Soupape de direction (1) pour l'alimentation d'un organe de réglage en pression hydraulique, constituée d'un arbre d'entrée (2), d'un arbre de sortie (3), d'un élément à ressort de centrage et d'un élément formant soupape, avec un élément amortisseur de vibrations torsionnelles pour l'amortissement de pulsations de pression, dans laquelle au moins une chambre annulaire (16) globalement coaxiale et pouvant être remplie d'un fluide de pression est conçue directement ou indirectement sur l'arbre d'entrée ou sur l'arbre de sortie, caractérisée en ce qu'au moins un élément formant piston (18) assemblé directement ou indirectement à l'autre arbre respectif et ayant la forme d'une traverse radiale conçue sur un anneau est agencé dans la chambre annulaire de façon à être mobile sur une trajectoire circulaire.

2. Soupape de direction selon la revendication 1, caractérisée en ce que la chambre annulaire est divisée en plusieurs chambres (16).

3. Soupape de direction selon l'une des revendications précédentes, caractérisée en ce que les chambres (16) et les pistons (18) sont conçus sur des éléments annulaires insérables l'un dans l'autre.

4. Soupape de direction selon l'une des revendications précédentes, caractérisée en ce que les chambres (16) et les pistons (18) sont conçus sur des douilles emboîtables l'une dans l'autre.

5. Soupape de direction selon l'une des revendications précédentes, caractérisée en ce que l'élément comportant les pistons est fixé à l'arbre d'entrée.

6. Soupape de direction selon l'une des revendications précédentes, dans laquelle celle-ci comporte comme élément formant soupape un manchon de soupape, caractérisée en ce que l'élément comportant les chambres est fixé ou intégré au manchon de soupape (10).

7. Soupape de direction selon l'une des revendications précédentes, caractérisée en ce que la chambre est remplie d'un fluide visqueux.

8. Soupape de direction selon l'une des revendications 1 à 7, caractérisée en ce que la chambre est remplie d'un fluide ayant une viscosité variable et commandable.
